(19) Europäisches Patentamt
European Patent Office
Office européen des brevets

(11) **EP 4 601 057 A2**

(12) **EUROPEAN PATENT APPLICATION**

(43) Date of publication:
**13.08.2025 Bulletin 2025/33**

(21) Application number: **25155831.8**

(22) Date of filing: **04.02.2025**

(51) International Patent Classification (IPC):
*H01M 8/065* (2016.01)    *C01B 3/04* (2006.01)

(52) Cooperative Patent Classification (CPC):
**H01M 8/065; C01B 3/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2024 US 202418438253**

(71) Applicant: **Hamilton Sundstrand Corporation Charlotte, NC 28217 (US)**

(72) Inventors:
• **PAPAS, Paul**
 **West Hartford, 06117 (US)**
• **SARAIDARIDIS, James Demetrios**
 **South Glastonbury, 06073 (US)**
• **DARLING, Robert M.**
 **South Windsor, 06074 (US)**

(74) Representative: **Dehns**
 **10 Old Bailey**
 **London EC4M 7NG (GB)**

(54) **SYSTEMS AND METHODS FOR ALANE-BASED POWER GENERATION**

(57) In accordance with at least one aspect of this disclosure, a system includes a hydrogen generator configured to decompose Alane to produce a flow of hydrogen and aluminum and a fuel cell fluidly connected to the hydrogen generator configured to receive the flow of hydrogen from the hydrogen generator and receive a flow of oxidizer to chemically generate electrical power and produce a flow of product water as a byproduct. The hydrogen generator is configured to receive the flow of product water to react with the aluminum and with Alane remaining in the hydrogen generator to generate an additional flow of hydrogen and heat, wherein the additional flow of hydrogen is provided to the fuel cell.

**Fig. 1**

## Description

### TECHNICAL FIELD

The present disclosure relates to power generation and more particularly to power generation including at least $AlH_3$ (hereinafter referred to as "Alane") -based power generation.

### BACKGROUND

Aircraft require new sustainable energy storage and power generation technologies that are recyclable, do not generate NOx, $CO_2$ or other pollutants, and have energy densities comparable to fossil fuels. Current state of the art technologies, such as Li-ion batteries, may not be adequate to fully address the future electrification needs of the aviation industry.

There is an ever-present need for improved systems and methods for power generation, e.g., for electric aircraft. This disclosure provides a solution for this need.

### SUMMARY

In accordance with at least one aspect of this disclosure, a system includes a hydrogen generator configured to decompose Alane to produce a flow of hydrogen and aluminum and a fuel cell fluidly connected to the hydrogen generator configured to receive the flow of hydrogen from the hydrogen generator and receive a flow of oxidizer to chemically generate electrical power and produce a flow of product water as a byproduct. The hydrogen generator is configured to receive the flow of product water to react with the aluminum and with Alane remaining in the hydrogen generator to generate an additional flow of hydrogen and heat. The fuel cell is capable of and configured to receive the additional flow of hydrogen and/or the additional flow of hydrogen is provided to the fuel cell. The hydrogen generator can be configured to supply at least heat to a heat engine.

The hydrogen generator can further include a plurality of Alane reactor cells configured to decompose Alane to produce at least the flow of hydrogen.

In certain embodiments, the heat engine includes a steam turbine, and the system can further include a water-steam circuit in thermal communication with the hydrogen generator to convert water within the water-steam circuit to steam and the water steam circuit configured to provide the steam within the water-steam circuit to the steam turbine to drive rotation of the steam turbine. Rotation of the steam turbine is configured to mechanically generate electrical power.

In certain embodiments, the system further comprises a heat engine configured to receive at least the heat from the hydrogen generator, wherein the heat engine includes a steam turbine, and further comprising: a water-steam circuit in thermal communication with the hydrogen generator to convert water within the water-steam circuit to steam and the water steam circuit configured to provide the steam within the water-steam circuit to the steam turbine to drive rotation of the steam turbine, wherein rotation of the steam turbine is configured to mechanically generate electrical power.

The flow of product water from the fuel cell can be a first flow of product water. A product water circuit can be configured to receive product water from the fuel cell for providing the first flow of product water back to the hydrogen generator for reacting with the Alane reactor cells.

A first heat exchanger can be disposed in the water-steam circuit between the steam turbine and the hydrogen generator configured to condense steam exhaust from the steam turbine into water within the water-steam circuit and provide water to the hydrogen generator for reaction with remaining Alane and/or aluminum.

A second heat exchanger can be disposed in the water-steam circuit fluidly connected to receive water within the water-steam circuit from the first heat exchanger. The second heat exchanger can also be disposed in the product water circuit fluidly connected to the hydrogen generator upstream of the fuel cell to receive a flow of water vapor from the hydrogen generator. Within the second heat exchanger, water in the water-steam circuit and the water vapor from the hydrogen generator are in thermal communication with one another, but fluidly isolated from one another. The second heat exchanger can be configured to exchange heat, e.g. between the water within the water-steam circuit and the water vapor from the hydrogen generator, to condense the water vapor from the hydrogen generator with the flow of water within the water-steam circuit to generate the flow of hydrogen provided to the fuel cell and further generate a second flow of product water within the product water circuit.

A first pump can be disposed in the water-steam circuit between the second heat exchanger and the hydrogen generator to pump the flow of water in the water steam circuit from the second heat exchanger to the hydrogen generator. A second pump can be disposed in the product water circuit between the second heat exchanger and the hydrogen generator to pump the flow of water in the water steam circuit from the second heat exchanger to the hydrogen generator.

In certain embodiments, a first water accumulator can be disposed in the water-steam circuit upstream of the first pump to control an injection of the flow of water within the water steam circuit into to the hydrogen generator. A second water accumulator can be disposed in the product water circuit upstream of the second pump to control an injection time of the product water into the Alane reactor cells of the hydrogen generator.

In certain embodiments, the water-steam circuit can be in fluid communication with the product water circuit via a connection line such that a portion of the flow of water within the water-steam circuit is provided to the product water circuit. The connection line can connect to the water-steam circuit between the first pump and the hydrogen generator and the connection line can connect to the product water circuit between the second heat exchanger and the second pump.

In certain embodiments, the flow of product water from the fuel cell can be a first flow of product water, and the heat engine can include a gas turbine engine, where a portion of a second flow of product water and a portion of the additional hydrogen from the hydrogen generator can be provided to a combustor section of the gas turbine engine.

In certain embodiments, the flow of product water from the fuel cell is a first flow of product water, wherein the heat engine includes a gas turbine engine, and the system further comprises a heat engine configured to receive at least heat from the hydrogen generator, wherein a combustor section of the gas turbine engine is configured to receive a portion of a second flow of product water and a portion of the additional hydrogen from the hydrogen generator.

The gas turbine engine can further include a compressor and a turbine mechanically coupled to the compressor, wherein the compressor is configured to provide a compressed airflow to the combustor section for mixing with fuel in the presences of the portion of the second flow of product water and the portion of the additional hydrogen. The turbine can be fluidly connected to the combustor section to receive exhaust from the combustor section to rotate the turbine and drive the compressor. The gas turbine engine can also include a generator coupled to rotate with the turbine, where rotation of the turbine drives rotation of the generator to mechanically produce electrical energy.

In accordance with at least one aspect of this disclosure, a method can include, decomposing Alane within an Alane reactor to generate a flow of hydrogen and aluminum, providing the flow of hydrogen to a fuel cell for reacting with a flow of oxidizer to chemically generate electrical power, providing a first flow of product water from the fuel cell to the Alane reactor to react the first flow of product water with the aluminum and remaining Alane within the Alane reactor, and, optionally, providing heat from the Alane reactor to a heat engine to drive the heat engine to mechanically generate electrical power.

In certain embodiments, providing heat from the Alane reactor to the heat engine (e.g. to drive the heat engine to mechanically generate electrical power) can further include, converting water in thermal communication with the Alane reactor to steam, providing the steam to a steam turbine to turn the steam turbine, and mechanically generating electrical power via rotation of the steam turbine. The method can further include, passing steam exhaust from the steam turbine to a first heat exchanger to condense the steam to a flow of water, passing the flow of water from the first heat exchanger to a second heat exchanger in thermal communication with a flow of water vapor from the hydrogen generator to condense the flow of water vapor to a second flow of product water and the flow of hydrogen, and providing the first flow of product water to the Alane reactor for further reaction with aluminum and/or Alane within the Alane reactor.

In certain embodiments providing heat from the Alane reactor to the heat engine (e.g. to drive the heat engine to mechanically generate electrical power) can include, providing a portion of the first flow of product water and a portion of the additional hydrogen from the Alane reactor to a combustor section of a gas turbine engine. The method can further include, combusting a fuel air mixture in the presence of the portion of the first flow of product water and the portion of the additional hydrogen, driving a turbine of the gas turbine engine fluidly connected to the combustor section to rotate a compressor of the gas turbine engine, and mechanically generating electrical power via rotation of the turbine.

These and other features of the systems and methods of the subject disclosure will become more readily apparent to those skilled in the art from the following detailed description taken in conjunction with the drawings. The system as herein described may be configured to carry out the method of the disclosure and/or the method may be carried out using the system as herein described.

## BRIEF DESCRIPTION OF THE DRAWINGS

So that those skilled in the art to which the subject disclosure appertains will readily understand how to make and use the devices and methods of the subject disclosure without undue experimentation, other embodiments thereof will be described in detail herein below with reference to certain figures, wherein:

    Fig. 1 is a schematic diagram in accordance with this disclosure, showing an embodiment of a power generation system; and
    Fig. 2 is a schematic diagram in accordance with this disclosure, showing another embodiment of a power generation system.

## DETAILED DESCRIPTION

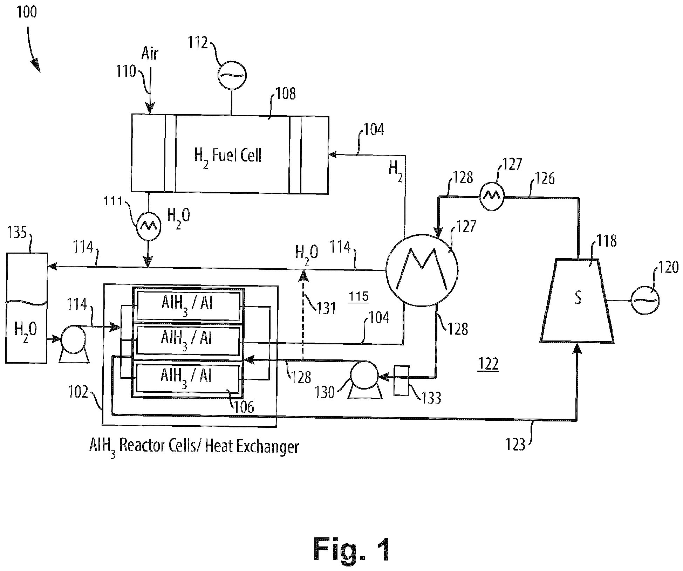

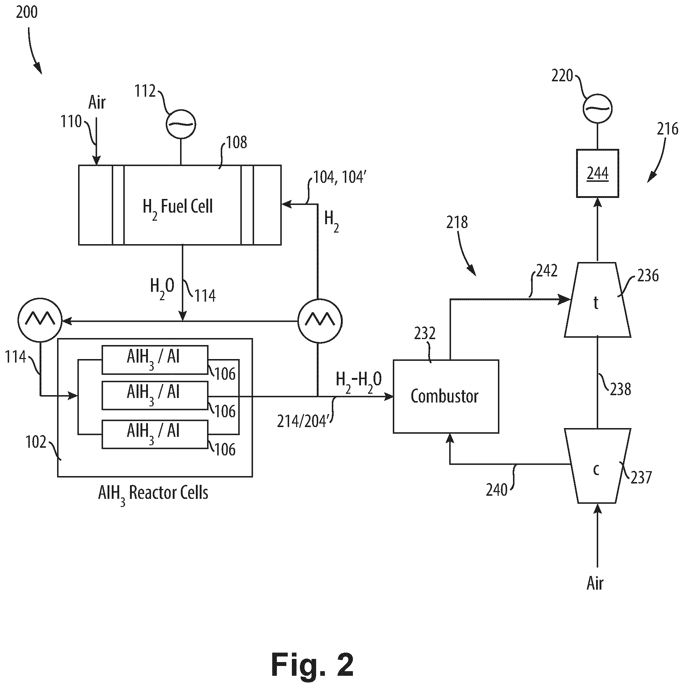

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2.

In accordance with at least one aspect of this disclosure, a system 100 can include a hydrogen generator 102 configured to decompose Alane ($AlH_3$) to produce a flow of hydrogen and produce aluminum, for

example, $AlH_3 \rightarrow Al + \frac{3}{2}H_2$ . The product aluminum can remain in the hydrogen generator 102, while the flow of hydrogen can be provided to a fuel cell via line 104. The decomposition of Alane is endothermic and waste heat from energy conversion systems (e.g., fuel cell or steam turbine) can be used to initiate decomposition. In embodiments, the hydrogen generator 102 can include a plurality of Alane reactor cells 106 for decomposition and/or for reacting with water, as described herein.

A fuel cell 108 is fluidly connected to the hydrogen generator 102 via line 104 configured to receive the flow of hydrogen from the hydrogen generator 102. A flow of oxidizer 110 (e.g., air) is also provided to the fuel cell 102 to react with the hydrogen to chemically generate electrical power 112. During the reaction, the fuel cell 102 creates a byproduct flow in line 109 which can be condensed to a first flow of product water via a fuel cell heat exchanger 111 (e.g., a condenser) in addition to the electrical energy 112. The hydrogen generator 102 can be configured to receive the first flow of product water from line 109 via line 114 in product water circuit 115. Condensing the fuel cell exhaust in line 109 can prevent generation of nitrous oxides. The first flow of product water can then be passed back to the hydrogen generator 102 to react with the aluminum generated in the first reaction, and with any Alane remaining in the hydrogen generator 102 (as the original decomposition may not fully consume the Alane), for example expressed as 2Al (or Al/AlH$_3$) + 4H$_2$O(l) → Al$_2$O$_3$ + 3H$_2$ + H$_2$O .... The fuel cell waste heat can be above 100C to initiate Alane decompositions This subsequent reaction can then generate an additional flow of hydrogen provided to the fuel cell 108 via line 104. The additional flow of hydrogen can be provided to the fuel cell 108 for further reaction with the oxidizer 110 and continued production of electrical energy and product water 114.

As the reaction of aluminum with water is exothermic, heat is generated, along with other products such as Al(OH)$_3$. A heat engine 116 can be operatively connected to receive the heat from the hydrogen generator 102 to drive the heat engine 116 to generate additional power via mechanical means. The heat engine 116 can receive the heat from the hydrogen generator 102 in the form of converting water to steam, for example via line 123.

In certain embodiments, such as shown in Fig. 1, the heat engine 116 can include a steam turbine 118 to receive the steam in line 123. In certain such embodiments, heat from the hydrogen generator 102 can be configured to convert water in a water-steam cycle to steam to then drive rotation of the steam turbine 118. Rotation of the steam turbine 118 can be then configured to mechanically generate electrical power 120. The water-steam circuit 122 can be in thermal communication with the hydrogen generator 102 to convert water within the water-steam circuit 122 to steam in line 123 and provide the steam 123 to the steam turbine 118, the steam turbine 118 being disposed in the water-steam circuit 122.

A first heat exchanger (e.g., a condenser) 124 can be disposed in the water-steam circuit 122 between the steam turbine 118 and the hydrogen generator 102 configured to condense exhaust 126 from the steam turbine 118 into water in line 128 within the water-steam circuit 122. A second heat exchanger 127 can be disposed in the water-steam circuit 122, downstream of the first heat exchanger 124. The second heat exchanger 127 is in fluid communication with both of the water-steam circuit 122 and the line 104 of the product water circuit 115. While within the second heat exchanger 127, the water-steam circuit 122 and the water vapor in line 104 are fluidly isolated, but in thermal communication with one another.

The heat exchanger 127 receives the condensed water from the first heat exchanger 124 in line 128 and the water vapor from the hydrogen generator 102 in line 104. The cooler water in the line 128 of the water-steam circuit 122 condenses the water vapor in line 104 leaving hydrogen gas which is provided to the fuel cell 108 for reaction with the oxidizer, and a stream of product water provided to the product water circuit 115 via line 114. The condensed water in line 114 of the product water circuit 114 is provided, along with the product water from the fuel cell to the hydrogen generator 102 via pump 129 for continued reaction with remaining Alane and/or aluminum within the reactor cells 106.

Water in line 128 can be pumped to the hydrogen reactor 102 via pump 130 to be reheated by waste heat from further reactions within the hydrogen generator 102 and returned to the water-steam cycle 122 and steam turbine 118 via line 123. As shown, the water in the water-steam cycle 122 in line 128 is in thermal communication with the hydrogen generator 102, where the hydrogen generator 102 acts as an evaporating heat exchanger.

In embodiments, the water-steam circuit 122 can be in fluid communication with the product water circuit 115 via a connection line 131 such that a portion of the flow of water within the water-steam circuit 122 is provided to line 114 of the product water circuit 115. As shown, the connection line 131 can connect to the water-steam circuit 122 between the pump 130 and the hydrogen generator 102, and the connection line can connect to the product water circuit 114 between the second heat exchanger 127 and the pump 129.

In certain embodiments, a first water accumulator 133 can be disposed in the water-steam circuit 122 upstream of the pump 130 to control an injection of the flow of water within the water-steam circuit 122 into to the hydrogen generator 102. A second water accumulator 135 can be disposed in the product water circuit 115 upstream of the pump 129 to control an injection time of the product water into the Alane reactor cells 106 of the hydrogen generator 102.

In accordance with at least one aspect of this disclosure, a method for generating power using the system 100 of Fig. 1, can include decomposing Alane within an Alane reactor (e.g., reactor 102) to generate a flow of hydrogen and aluminum. The method includes providing the flow of hydrogen to a fuel cell (e.g., fuel cell 108) for reacting with a flow of oxidizer to chemically generate electrical power. The method can further include providing product water from the fuel cell to the Alane reactor to react water with the aluminum and remaining Alane within the Alane reactor and providing heat from the Alane reactor to a heat recovery means, such as a heat engine (e.g., heat engine 116) to drive the heat engine to mechanically generate electrical power.

Providing heat from the Alane reactor to the heat engine can further include converting water in thermal communication with the Alane reactor to steam, providing the steam to a steam turbine (e.g., steam turbine 118) to turn the steam turbine, and mechanically generating electrical power via rotation of the steam turbine. The method can further include passing steam exhaust from the steam turbine to a condenser (e.g., condenser 124) to condense the steam to a flow of water in a water steam circuit, while at the same time condensing water out of a flow of water vapor from the hydrogen generator, and providing the flow of water along with the product water from the fuel cell to the Alane reactor for further reaction with aluminum and/or Alane within the Alane reactor. In embodiments, the steam turbine condenser can serve as a secondary source of water for the Alante reactor, and a fuel cell condenser can be used to generate the source of liquid product water.

Referring now to Fig. 2, another embodiment of a system 200 is shown. The system 200 can be similar to that of the system 100, for example the system 200 can have similar components and features with respect to the system 100. For brevity, the description of common elements that have been described above for the system 100 are not repeated with respect to the system 200 as shown in Fig. 2.

As shown, the heat engine 216 can include a gas turbine 218 engine fluidly connected to the hydrogen generator 102. The gas turbine engine 218 can include a combustor section 232 configured to receive, both of: a portion of the flow of water from the fuel cell 108; and a portion of the additional hydrogen 214' from the hydrogen generator 102.

In certain such embodiments, the gas turbine engine 218 can include a compressor 234 and a turbine 236 mechanically coupled to the compressor 234 via shaft 238. The compressor 234 can be configured to provide a compressed airflow 240 to the combustor section 232 for mixing with fuel in the presences of the portion of the flow of water 214 and the portion of the additional hydrogen 204'. The turbine 236 can be fluidly connected to the combustor section 232 to receive exhaust 242 from the combustor section 232 to rotate the turbine 236 and drive the compressor 234. In certain embodiment, the gas turbine engine can also include a generator 244 coupled to rotate with the turbine 236, where rotation of the turbine 236 drives rotation of the generator 244 to mechanically produce electrical energy 220.

In accordance with at least one aspect a method for generating power using the system of Fig. 2, can include decomposing Alane within an Alane reactor (e.g., reactor 102) to generate a flow of hydrogen and aluminum. The method includes providing the flow of hydrogen to a fuel cell (e.g., fuel cell 108) for reacting with a flow of oxidizer to chemically generate electrical power. The method can further include providing product from the fuel cell to the Alane reactor to react water with the aluminum and remaining Alane within the Alane reactor and providing heat from the Alane reactor to a heat engine (e.g., heat engine 216) to drive the heat engine to mechanically generate electrical power.

In certain embodiments, providing heat from the Alane reactor to the heat engine can include providing a portion of the product water from the fuel cell and a portion of the additional hydrogen from the Alane reactor to a combustor section of a gas turbine engine (e.g., engine 218). In certain such embodiments, the method can further include, combusting a fuel air mixture in the presence of the portion of product water and the portion of the additional hydrogen, driving a turbine (e.g., turbine 236) of the gas turbine engine fluidly connected to the combustor section to rotate a compressor (e.g., compressor 234) of the gas turbine engine, and mechanically generating electrical power via rotation of the turbine.

Embodiments provide system and methods to generate power without NOx formation. Embodiments include a novel Alane-based fuel cell, combined cycle, which can utilize the decomposition of Alane $AlH_3 \rightarrow Al + \frac{3}{2}H_2$ in reactors to form $H_2$ for generating electrical power from fuel cells. Water generated in the fuel cells can be introduced back into the Alane reactors depleted of $H_2$ but containing highly reactive, porous Al to form steam, more $H_2$ and condensed phase oxides/ hydroxides such as $Al_2O_3$ and $Al_2(OH)_3$. The additional $H_2$ generated in the second step of the process can be re-introduced into the fuel cells for more power. Generation and the heat generated from the $Al + H_2O(l)$ reaction can be used to generate steam for power generation from a steam turbine cycle, such as shown in Fig. 1. In certain embodiments (as shown in Fig. 2), e.g., if NOx emission is not limiting, $H_2 - H_2O$ can be burned in a combustor to drive a gas turbine.

Alane ($AlH_3$) has an equivalent gravimetric energy density on a fuel basis (44 MJ/kg) to liquid hydrocarbon jet fuels, whereas the volumetric energy density of $AlH_3$ and $Al$ (65 & 76 MJ/L) exceed Jet A (34 MJ/L). The efficiency of the combined cycles such as disclosed herein, would be higher than that of the fuel cell alone because the system would be able to utilize the energy content of the Alane more fully by capturing the waste heat. Further, embodiments of the disclosed system and method can operate without production of nitrogen oxides.

Embodiments provide a two-step process for generating both $H_2$ for use in the fuel cell and heat for use in a heat engine. Step one in the process includes decomposing Alane without water and producing $H_2$ for reacting in the fuel cell to generate electricity. Then, in the second step of the process, separate from the initial Alane decomposition, the product water from the fuel cell (or steam turbine, or accumulator) is introduced into the Alane reactor to react with the aluminum and any remaining Alane to produce additional hydrogen, and heat. Reusing the water from the fuel cell in another reaction can be important for certain applications, such as aircraft, where water management is crucial. Accordingly, embodiments of the systems described herein are particularly suitable for aircraft applications.

Additionally, in aircraft application, reduction of emissions can be an important consideration, therefore, embodiments of the system and method the having a steam cycle allows for power generation with little or no NOx production. In certain embodiments, the $H_2$ produced by the hydrogen generator can also be used as an alternative fuel and the electrical power generated by the fuel cell and/or the heat engine can be used to power one or more portions of the aircraft (e.g., an electric or hybrid-electric propulsor) or can be stored in an electric storage for use by one or more electric components of the aircraft.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of"

Any suitable combination(s) of any disclosed embodiments and/or any suitable portion(s) thereof are contemplated herein as appreciated by those having ordinary skill in the art in view of this disclosure.

Certain embodiments of the present disclosure include:

    1. A system, comprising:

        a hydrogen generator configured to decompose Alane to produce a flow of hydrogen and aluminum;
        a fuel cell fluidly connected to the hydrogen generator configured to receive the flow of hydrogen from the hydrogen generator and receive a flow of oxidizer to chemically generate electrical power and produce a flow of product water as a byproduct;
        wherein the hydrogen generator is configured to receive the flow of product water to react with the aluminum and with Alane remaining in the hydrogen generator to generate an additional flow of hydrogen and heat, wherein the fuel cell is capable of and
        configured to receive the additional flow of hydrogen.

    2. The system of embodiment 1, wherein the hydrogen generator further includes a plurality of Alane reactor cells configured to decompose Alane to produce at least the flow of hydrogen.

    3. The system of embodiment 1, further comprising, a heat engine configured to receive at least the heat from the hydrogen generator, wherein the heat engine includes a steam turbine, and further comprising:
    a water-steam circuit in thermal communication with the hydrogen generator to convert water within the water-steam circuit to steam and the water steam circuit configured to provide the steam within the water-steam circuit to the steam turbine to drive rotation of the steam turbine, wherein rotation of the steam turbine is configured to mechanically generate electrical power.

4. The system of embodiment 3, wherein the flow of product water from the fuel cell is a first flow of product water, further comprising, a product water circuit configured to receive product water from the fuel cell for providing the first flow of product water back to the hydrogen generator for reacting with the Alane reactor cells.

5. The system of embodiment 4, further comprising a first heat exchanger disposed in the water-steam circuit between the steam turbine and the hydrogen generator configured to condense steam exhaust from the steam turbine into water within the water-steam circuit and provide water to the hydrogen generator for reaction with remaining Alane and/or aluminum.

6. The system of embodiment 5, further comprising a second heat exchanger disposed in the water-steam circuit fluidly connected to receive water within the water-steam circuit from the first heat exchanger, and wherein the second heat exchanger is disposed in the product water circuit fluidly connected to the hydrogen generator upstream of the fuel cell to receive a flow of water vapor from the hydrogen generator, wherein within the second heat exchanger, water in the water-steam circuit and the water vapor from the hydrogen generator are in thermal communication with one another, but fluidly isolated from one another, to exchange heat to condense the water vapor from the hydrogen generator with the flow of water within the water-steam circuit to generate the flow of hydrogen provided to the fuel cell and generate a second flow of product water within the product water circuit.

7. The system of embodiment 6, further comprising a first pump disposed in the water-steam circuit between the second heat exchanger and the hydrogen generator to pump the flow of water in the water steam circuit from the second heat exchanger to the hydrogen generator; and
a second pump disposed in the product water circuit between the second heat exchanger and the hydrogen generator to pump the flow of water in the water steam circuit from the second heat exchanger to the hydrogen generator.

8. The system of embodiment 7, further comprising:

a first water accumulator disposed in the water-steam circuit upstream of the first pump to control an injection of the flow of water within the water steam circuit into to the hydrogen generator; and
a second water accumulator disposed in the product water circuit upstream of the second pump to control an injection time of the product water into the Alane reactor cells of the hydrogen generator.

9. The system of embodiment 7, wherein the water-steam circuit is in fluid communication with the product water circuit via a connection line such that a portion of the flow of water within the water-steam circuit is provided to the product water circuit, wherein the connection line connects to the water-steam circuit between the first pump and the hydrogen generator and wherein the connection line connects to the product water circuit between the second heat exchanger and the second pump.

10. The system of embodiment 1, wherein the flow of product water from the fuel cell is a first flow of product water, wherein the heat engine includes a gas turbine engine, and further comprising a heat engine configured to receive at least heat from the hydrogen generator, wherein a combustor section of the gas turbine engine is configured to receive a portion of a second flow of product water and a portion of the additional hydrogen from the hydrogen generator.

11. The system of embodiment 10, wherein the gas turbine engine further includes a compressor and a turbine mechanically coupled to the compressor, wherein the compressor is configured to provide a compressed airflow to the combustor section for mixing with fuel in the presences of the portion of the second flow of product water and the portion of the additional hydrogen, and wherein the turbine is fluidly connected to the combustor section to receive exhaust from the combustor section to rotate the turbine and drive the compressor.

12. The system of embodiment 11, wherein the gas turbine engine further includes a generator coupled to rotate with the turbine, wherein rotation of the turbine drives rotation of the generator to mechanically produce electrical energy.

13. A method, comprising:

decomposing Alane within an Alane reactor to generate a flow of hydrogen and aluminum;
providing the flow of hydrogen to a fuel cell for reacting with a flow of oxidizer to chemically generate electrical power;
providing a first flow of product water from the fuel cell to the Alane reactor to react the first flow of product water with the aluminum and remaining Alane within the Alane reactor.

14. The method of embodiment 13, further comprising, providing heat from the Alane reactor to a heat engine to drive the heat engine to mechanically generate electrical power, wherein providing heat from the Alane reactor to the heat engine further includes, converting water in thermal communication with the Alane reactor to steam;

providing the steam to a steam turbine to turn the steam turbine; and
mechanically generating electrical power via rotation of the steam turbine.

15. The method of embodiment 14, further comprising:

passing steam exhaust from the steam turbine to a first heat exchanger to condense the steam to a flow of water;
passing the flow of water from the first heat exchanger to a second heat exchanger in thermal communication with a flow of water vapor from the hydrogen generator to condense the flow of water vapor to a second flow of product water and the flow of hydrogen; and
providing the first flow of product water to the Alane reactor for further reaction with aluminum and/or Alane within the Alane reactor.

16. The method of embodiment 13, further comprising, providing heat from the Alane reactor to a heat engine to drive the heat engine to mechanically generate electrical power, wherein providing heat from the Alane reactor to the heat engine further includes:
providing a portion of the first flow of product water and a portion of the additional hydrogen from the Alane reactor to a combustor section of a gas turbine engine.

17. The method of embodiment 16, further comprising:

combusting a fuel air mixture in the presence of the portion of the first flow of product water and the portion of the additional hydrogen;
driving a turbine of the gas turbine engine fluidly connected to the combustor section to rotate a compressor of the gas turbine engine; and
mechanically generating electrical power via rotation of the turbine.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A system, comprising:

a hydrogen generator configured to decompose Alane to produce a flow of hydrogen and aluminum;
a fuel cell fluidly connected to the hydrogen generator configured to receive the flow of hydrogen from the hydrogen generator and receive a flow of oxidizer to chemically generate electrical power and produce a flow of product water as a byproduct;
wherein the hydrogen generator is configured to receive the flow of product water to react with the aluminum and with Alane remaining in the hydrogen generator to generate an additional flow of hydrogen and heat, wherein the fuel cell is capable of and configured to receive the additional flow of hydrogen.

2. The system of claim 1, wherein:
the hydrogen generator further includes a plurality of Alane reactor cells configured to decompose Alane to produce at least the flow of hydrogen, and/or wherein:
the system further comprises a heat engine configured to receive at least the heat from the hydrogen generator, wherein the heat engine includes a steam turbine, and further comprising:
a water-steam circuit in thermal communication with the hydrogen generator to convert water within the water-steam circuit to steam and the water steam circuit configured to provide the steam within the water-steam circuit to the steam turbine to drive rotation of the steam turbine, wherein rotation of the steam turbine is configured to mechanically generate electrical power.

3. The system of claim 2, wherein the flow of product water from the fuel cell is a first flow of product water, further comprising, a product water circuit configured to receive product water from the fuel cell for providing the first flow of product water back to the hydrogen generator for reacting with the Alane reactor cells.

4. The system of claim 2 or claim 3, further comprising a first heat exchanger disposed in the water-steam circuit between the steam turbine and the hydrogen generator configured to condense steam exhaust from the steam turbine into water within the water-steam circuit and provide water to the hydrogen generator for reaction with remaining Alane and/or aluminum,
said system optionally further comprising a second heat exchanger disposed in the water-steam circuit fluidly connected to receive water within the water-steam circuit from the first heat exchanger, and wherein the second heat exchanger is disposed in the product water circuit fluidly connected to the hydrogen generator upstream of the fuel cell to receive a flow of water vapor from the hydrogen generator, wherein within the second heat exchanger, water in the water-steam circuit and the water vapor from the hydrogen generator are in thermal communication with one another, but fluidly isolated from one another, to exchange heat to condense the water vapor from the hydrogen generator with the flow of water within the water-steam circuit to generate the flow of hydrogen provided to the fuel cell and generate a second flow of product water within the product water circuit.

5. The system of claim 4, further comprising a first pump disposed in the water-steam circuit between the second heat exchanger and the hydrogen generator to pump the flow of water in the water steam circuit from the second heat exchanger to the hydrogen generator; and
a second pump disposed in the product water circuit between the second heat exchanger and the hydrogen generator to pump the flow of water in the water steam circuit from the second heat exchanger to the hydrogen generator.

6. The system of claim 5, further comprising:

a first water accumulator disposed in the water-steam circuit upstream of the first pump to control an injection of the flow of water within the water steam circuit into to the hydrogen generator; and
a second water accumulator disposed in the product water circuit upstream of the second pump to control an injection time of the product water into the Alane reactor cells of the hydrogen generator.

7. The system of claim 5 or claim 6, wherein the water-steam circuit is in fluid communication with the product water circuit via a connection line such that a portion of the flow of water within the water-steam circuit is provided to the product water circuit, wherein the connection line connects to the water-steam circuit between the first pump and the hydrogen generator and wherein the connection line connects to the product water circuit between the second heat exchanger and the second pump.

8. The system of any preceding claim, wherein the flow of product water from the fuel cell is a first flow of product water, wherein the heat engine includes a gas turbine engine, and further comprising a heat engine configured to receive at least heat from the hydrogen generator, wherein a combustor section of the gas turbine engine is configured to receive a portion of a second flow of product water and a portion of the additional hydrogen from the hydrogen generator.

9. The system of claim 8, wherein the gas turbine engine further includes a compressor and a turbine mechanically coupled to the compressor, wherein the compressor is configured to provide a compressed airflow to the combustor section for mixing with fuel in the presences of the portion of the second flow of product water and the portion of the additional hydrogen, and wherein the turbine is fluidly connected to the combustor section to receive exhaust from the combustor section to rotate the turbine and drive the compressor.

10. The system of claim 8 or claim 9, wherein the gas turbine engine further includes a generator coupled to rotate with the turbine, wherein rotation of the turbine drives rotation of the generator to mechanically produce electrical energy.

11. A method, comprising:

decomposing Alane within an Alane reactor to generate a flow of hydrogen and aluminum;
providing the flow of hydrogen to a fuel cell for reacting with a flow of oxidizer to chemically generate electrical power;
providing a first flow of product water from the fuel cell to the Alane reactor to react the first flow of product water with the aluminum and remaining Alane within the Alane reactor.

12. The method of claim 11, further comprising, providing heat from the Alane reactor to a heat engine to drive the heat engine to mechanically generate electrical power, wherein providing heat from the Alane reactor to the heat engine further includes,

converting water in thermal communication with the Alane reactor to steam;
providing the steam to a steam turbine to turn the steam turbine; and
mechanically generating electrical power via rotation of the steam turbine.

13. The method of claim 12, further comprising:

passing steam exhaust from the steam turbine to a first heat exchanger to condense the steam to a flow of water;
passing the flow of water from the first heat exchanger to a second heat exchanger in thermal communication with a flow of water vapor from the hydrogen generator to condense the flow of water vapor to a second flow of product water and the flow of hydrogen; and
providing the first flow of product water to the Alane reactor for further reaction with aluminum and/or Alane within the Alane reactor.

14. The method of any one of claims 11 to 13, further comprising, providing heat from the Alane reactor to a heat engine to drive the heat engine to mechanically generate electrical power, wherein providing heat from the Alane reactor to the heat engine further includes:
providing a portion of the first flow of product water and a portion of the additional hydrogen from the Alane reactor to a combustor section of a gas turbine engine.

15. The method of claim 14, further comprising:

combusting a fuel air mixture in the presence of the portion of the first flow of product water and the portion of the additional hydrogen;
driving a turbine of the gas turbine engine fluidly connected to the combustor section to rotate a compressor of the gas turbine engine; and
mechanically generating electrical power via rotation of the turbine.

# Fig. 1

Fig. 2